# EUROPEAN PATENT SPECIFICATION

(11) **EP 0 490 831 B1**
(45) Date of publication and mention of the grant of the patent: **08.02.1995**
(21) Application number: 91830530.1
(22) Date of filing: 03.12.1991
(51) Int. Cl.: B60B 7/00, B60B 35/00, B60R 17/00, G01F 23/02

(54) **A wheel hub cap**
Radkappe
Chapeau du moyeu pour roues de véhicules

(30) Priority: 07.12.1990 IT 5341290 U
(43) Date of publication of application: 17.06.1992
(73) Proprietor: IVECO FIAT S.p.A., 10156 Torino (IT)
(72) Inventor: Randone, Claudio, I-10040 Almese (Torino) (IT)
(74) Representative: Marchitelli, Mauro

(56) References cited:
- DE-B- 1 107 409
- DE-U- 8 715 471
- US-A- 3 064 982
- US-A- 3 089 338
- US-A- 4 834 464

## Description

The present invention relates to a wheel hub cap, particularly for commercial vehicles with wheel bearings lubricated by oil, of the type comprising a metal cup-shaped body which is mounted on a hub and has a hole in its end with a transparent screen for the visual inspection of the oil level.

US-A-3 064 982 discloses the use of a large hole with a transparent screen which extends over substantially the whole of the end wall of the cup-shaped metal body so that the level of the oil in the wheel hub can be checked quickly.

Whilst this solution enables easy inspection of the level, the transparent screen may be subject to breakage resulting in the leakage of oil.

The object or the present invention is to provide a hub cap or the type specified at the beginning of the description which does not have the aforesaid disadvantages and which is easy and cheap to produce.

According to the invention, this object is achieved by a wheel hub cap having the features defined in claim 1.

By virtue of this characteristic, the inspection holes define a plurality of radial portions converging towards a flat central portion of the metal body and the area of the transparent screen which is subject to accidental knocks is thus considerably reduced. The breakage of the transparent screen and the resulting leakage of the lubricating oil for the bearings is thus prevented without any reduction in the ease of visual inspection of the level.

Preferably, the transparent screen has a flat, circular portion with raised portions which are adapted to be inserted in the inspection holes during assembly.

The flat tops of the raised portions of the transparent screen are thus substantially flush with the circular central portion and the radial portions of the end wall of the cup-shaped metal body of the cap when the cap is assembled.

Further advantages and characteristics of the hub cap according to the present invention will become clear from the detailed description which follows, provided purely by way of non-limiting example, with reference to the appended drawings, in which:

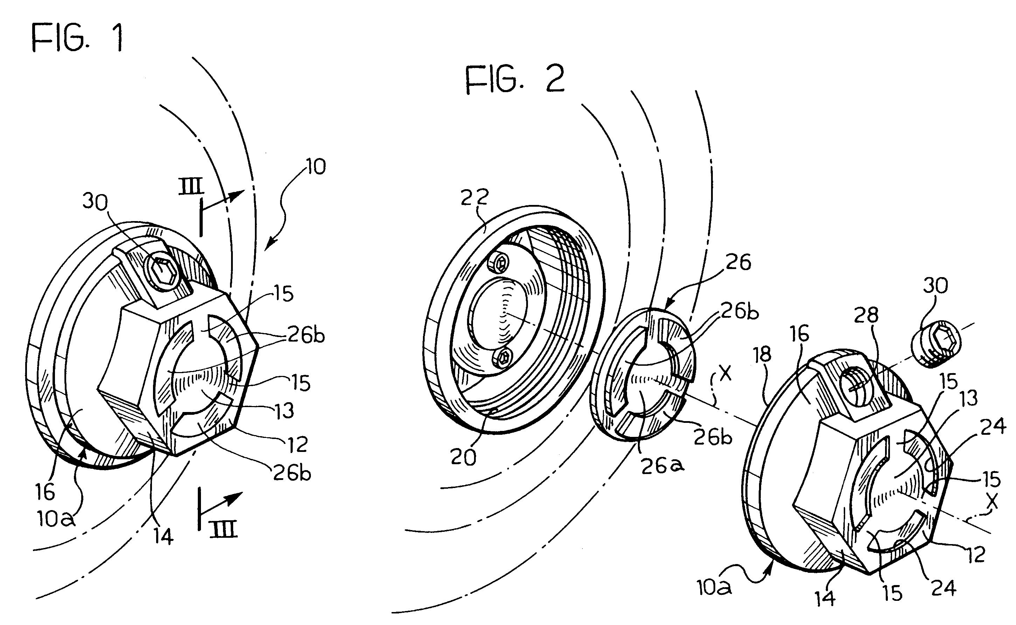

Figure 1 is a perspective view of a wheel hub cap according to the invention mounted on the wheel of a commercial vehicle,
Figure 2 is an exploded perspective view of the cap of Figure 1,
Figure 3 is a section taken on the line III-III of Figure 1, and
Figure 4 is a detail of Figure 3 on an enlarged scale.

With reference to the drawings, a wheel hub cap, generally indicated 10, comprises a cup-shaped metal body 10a with an end wall 12 connected to a side wall defined by a hexagonal portion 14, a conical portion 16, and an end region 18 with a thread which corresponds to an internal thread 20 of a wheel hub 22.

The end wall 12 of the body 10a has three circular-sector-shaped holes 24 in an annular region of the end wall 12 whose centre lies on the axis X-X of the body 10a. The shaped holes 24 define a flat, circular, central portion 13 of the end wall 12 which is joined to the portion 14 of the side wall of the cup-shaped body 10a by flat radial arms 15.

A transparent screen 26 of polymeric material, for example polycarbonate, is glued to an inner face 12a of the end wall 12 of the metal cup-shaped body 10a and has a flat circular portion 26a with circular-sector-shaped raised portions 26b which correspond substantially to the holes 24 in the end wall 12 of the cup-shaped body 10a and whose heights correspond substantially to the thickness of the wall 12.

A threaded through-hole 28, into which a screw plug 30 is screwed, is provided in the conical portion 16 of the side wall of the cup-shaped body 10a for the topping-up of the lubricating oil of the hub.

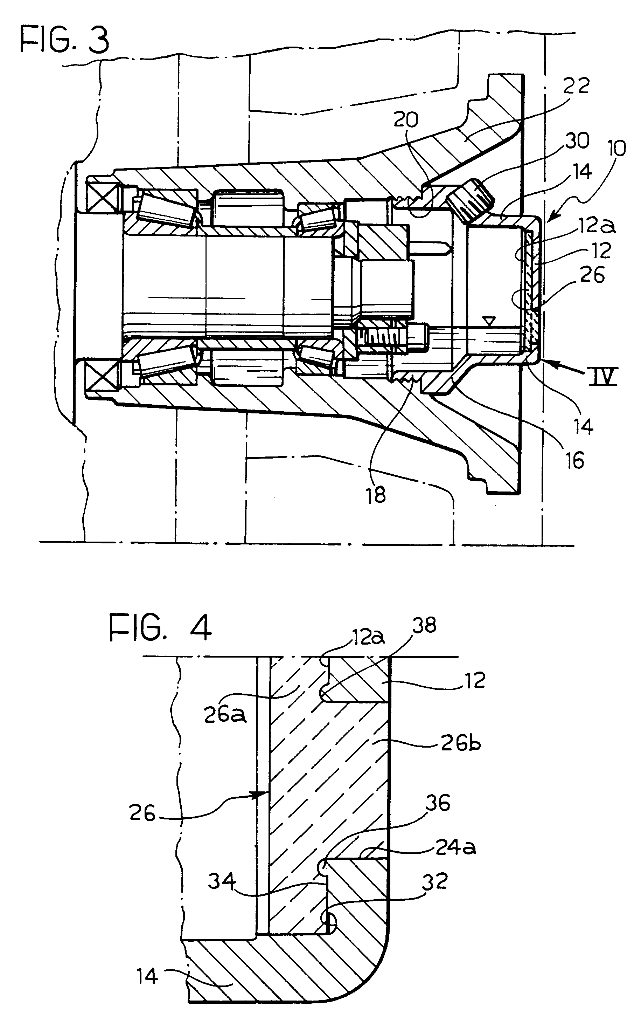

Figure 4 shows a structural detail of the end wall 12 of the cup-shaped body 10a of the cap, the inner face 12a of which has annular grooves 32 disposed around flat edge portions 34 of the holes 24 to which an adhesive is intended to be applied. The grooves 32 prevent excess adhesive from seeping along the walls, indicated 24a in Figure 4, of the holes 24 and making the transparent screen 12 "dirty". Annular projections 36 disposed around the holes 24 on the inner face 12a of the end wall 12 and complementary to annular grooves 38 around the raised portions 26b of the transparent screen 26 help to direct the excess adhesive into the grooves 32.

## Claims

1. A wheel hub cap (10) particularly for commercial vehicles with wheel bearings lubricated by oil, of the type comprising a cup-shaped metal body (10a) mounted on the hub and having a hole (24) in its end with a transparent screen (26) for the visual inspection of the oil level, characterised in that:
the end wall (12) of the metal body (10a) of the cap (10) has a flat, circular, central portion (13) connected to the side wall (14) of the body by radial arms (15),
inspection holes (24) are defined between the central portion (13), the radial arms (15) and the side wall (14) of the body (10a), and in that
the transparent screen (26) is placed inside the cap (10) and is arranged to close said inspection holes (24).

2. A cap according to claim 1, characterised in that the transparent screen (26) has a flat, circular portion (26a) with raised portions (26b) which are adapted to be inserted in the inspection holes (24) during assembly.

3. A cap according to claim 2, characterised in that annular grooves (32) in the inner face (12a) of the end wall (12) of the cup-shaped metal body (10a) delimit annular edge regions (34) of the inspection holes (24) and are adapted to receive excess adhesive when the metal body (10a) and the transparent screen (26) are glued together.

4. A cap according to claim 3, characterised in that the inner face (12a) of the end wall (12) has annular projections (36) which project inwardly of the cup-shaped body (10a) at the edges of the inspection holes (24), said projections (36) having shapes complementary to those of respective annular grooves (38) disposed around the raised portions (26b) of the transparent screen (26).

5. A cap according to any one of the preceding claims, characterised in that the inspection holes (24) are circular-sector-shaped.

## Patentansprüche

1. Radnabenkappe (10), insbesondere für Nutzfahrzeuge mit ölgeschmierten Radlagern, der Ausführung mit einem becherförmigen Metallkörper (10a), der an der Nabe befestigt ist und für die Sichtkontrolle des Ölstandes in seiner Stirnseite eine Öffnung (24) mit einer durchsichtigen Abdeckung (26) aufweist, dadurch gekennzeichnet, daß:
die Stirnwand (12) des Metallkörpers (10a) der Kappe (10) ein ebenes, kreisrundes Mittelteil (13) aufweist, das mit der Seitenwand (14) des Körpers mittels radialer Arme (15) verbunden ist,
Kontrollöffnungen (24) zwischen dem Mittelteil (13), den radialen Armen (15) und der Seitenwand (14) des Körpers (10a) definiert sind, und daß
die durchsichtige Abdeckung (26) innerhalb der Kappe (10) angebracht und so angeordnet ist, daß sie die Kontrollöffnungen (24) verschließt.

2. Radnabenkappe nach Anspruch 1, dadurch gekennzeichnet, daß die durchsichtige Abdeckung (26) einen ebenen kreisrunden Abschnitt (26a) mit erhabenen Teilen (26b) aufweist, die zum Einsetzen in die Kontrollöffnungen (24) während des Zusammenbaus ausgebildet sind.

3. Radnabenkappe nach Anspruch 2, dadurch gekennzeichnet, daß ringförmige Nuten (32) in der Innenfläche (12a) der Stirnwand (12) des becherförmigen Metallkörpers (10a) ringförmige Randbereiche (34) der Kontrollöffnungen (24) begrenzen und so ausgebildet sind, daß sie überschüssiges Klebemittel aufnehmen, wenn der Metallkörper (10a) und die durchsichtige Abdeckung (26) zusammengeklebt werden.

4. Radnabenkappe nach Anspruch 3, dadurch gekennzeichnet, daß die Innenfläche (12a) der Stirnwand (12) ringförmige Vorsprünge (36) aufweist, die an den Rändern der Kontrollöffnungen (24) in das Innere des becherförmigen Körpers (10a) hineinragen, wobei die Vorsprünge (36) Formen aufweisen, die komplementär zu denjenigen einzelner ringförmiger, um die erhabenen Teile (26b) der durchsichtigen Abdeckung (26) angeordneter Nuten (38) sind.

5. Radnabenkappe nach einem der vorhergehenden Ansprüche, dadurch gekennzeichnet, daß die Kontrollöffnungen (24) kreissektorförmig sind.

## Revendications

1. Chapeau (10) de moyeu de roue, notamment pour véhicules commerciaux avec des roulements de roue lubrifiés par de l'huile, du type comprenant un corps métallique (10a) en forme de coupelle monté sur le moyeu et ayant un trou (24) dans son extrémité muni d'un écran transparent (26) pour l'inspection visuelle du niveau d'huile, caractérisé en ce que :
la paroi d'extrémité (12) du corps métallique (10a) du chapeau (10) présente une partie centrale (13) plane et circulaire reliée à la paroi latérale (14) du corps par des bras radiaux (15),
des trous d'inspection (24) sont définis entre la partie centrale (13), les bras radiaux (15) et la paroi latérale (14) du corps (10a), et en ce que :
l'écran (26) transparent est placé à l'intérieur du chapeau (10) et est adapté à fermer lesdits trous (24) d'inspection.

2. Chapeau selon la revendication 1, caractérisé en ce que l'écran (26) transparent présente une partie (26a) plane circulaire munie de parties (26b) surélevées qui sont adaptées à être insérées dans les trous (24) d'inspection pendant l'assemblage.

3. Chapeau selon la revendication 2, caractérisé en ce que des gorges (32) annulaires dans la face intérieure (12a) de la paroi d'extrémité (12) du corps (10a) métallique en forme de coupelle délimitent les régions (34) de bord annulaire des trous (24) d'inspection et sont adaptées à recevoir un adhésif en excès lorsque le corps (10a) métallique et l'écran (26) transparent sont collés l'un à l'autre.

4. Chapeau selon la revendication 3, caractérisé en ce que la face intérieure (12a) de la paroi (12) d' extrémité présente des protubérances (36) annulaires qui font saillie vers l'intérieur du corps (10a) en forme de coupelle aux bords des trous (24) d'inspection, lesdites protubérances (36) ayant des formes complémentaires de celles de gorges (38) annulaires respectives disposées autour des parties (26b) surélevées de l'écran (26) transparent.

5. Chapeau selon l'une quelconque des revendications précédentes, caractérisé en ce que les trous (24) d'inspection ont la forme de secteurs circulaires.
